# EUROPÄISCHE PATENTANMELDUNG

(11) **EP 1 245 838 A2**
(43) Veröffentlichungstag der Anmeldung: **02.10.2002**
(21) Anmeldenummer: 02003808.9
(22) Anmeldetag: 20.02.2002
(51) Int. Cl.: F16B 21/02

(54) **Schnellspannelement**

(30) Priorität: 26.03.2001 DE 10114884
(71) Anmelder: Georg Fischer Schwab GmbH & Co. KG, 72793 Pfullingen (DE)
(72) Erfinder: Görlich, Arno, 72639 Neuffen (DE)
(74) Vertreter: Weiss, Wolfgang, Dr.

(57) **Zusammenfassung**

Ein Schnellspannelement (1) zum Aneinanderklemmen zweier Teile umfasst eine Anlagefläche (2), einen Klemmkopf (3) und einen dazwischen vorgesehenen Verbindungsschaft (4), der gegenüber Anlagefläche (2) und Klemmkopf (3) jeweils nach innen zurückspringt, wobei am Klemmkopf (3) zur Anlagefläche (2). etwa parallele erste und zweite Klemmflächen (5, 6) vorgesehen sind, die von der Anlagefläche (2) unterschiedlich weit beabstandet und in Umfangsrichtung des Verbindungsschafts (4) gegeneinander winkelversetzt sind. Das erfindungsgemäße Schnellspannelement ermöglicht einen bajonettartigen Drehverschluss zum wahlweisen Verbinden von Teilen mit einer ersten oder zweiten Gesamtwandstärke.

## Beschreibung

Die Erfindung betrifft ein Schnellspannelement zum Aneinanderklemmen zweier Teile.

Sanitärelemente für den Trockenbau stellen üblicherweise Rahmenkonstruktionen dar, die sich aus der Anordnung horizontaler und vertikaler Profilstücke (z.B. Vierkant- oder C-Profile) ergeben, an die verschiedene Sanitärinstallationen, wie z.B. ein Spülkasten, angebracht werden können. Die einzelnen Profile und die Sanitärinstallationen werden miteinander bzw. an der Rahmenkonstruktion mit einer mehrteiligen Schraubverbindung, nämlich Schraube und Schraubenmutter, befestigt. Das Ausbilden und Lösen der Schraubverbindung erfordert einen erhöhten Arbeitsaufwand, und dabei besteht stets die Gefahr, dass Schrauben und Schraubenmuttern herunterfallen und verloren gehen.

Es ist daher die Aufgabe der Erfindung, ein einteiliges Schnellspannelement zum einfachen Festklemmen zweier Flachteile bereitzustellen.

Diese Aufgabe wird erfindungsgemäß gelöst durch ein Schnellspannelement mit einer Anlagefläche, einem Klemmkopf und einem dazwischen vorgesehenen Verbindungsschaft, der gegenüber Anlagefläche und Klemmkopf jeweils nach innen zurückspringt, wobei am Klemmkopf zur Anlagefläche etwa parallele erste und zweite Klemmflächen vorgesehen sind, die von der Anlagefläche unterschiedlich weit beabstandet und in Umfangsrichtung des Verbindungsschafts gegeneinander winkelversetzt sind.

Das erfindungsgemäße Schnellspannelement ermöglicht einen bajonettartigen Drehverschluss zum wahlweisen Verbinden von zwei oder mehr Teilen mit einer ersten oder zweiten Gesamtwandstärke.

Für eine symmetrische Klemmwirkung weist der Klemmkopf jeweils zwei einander bezüglich des Verbindungsschafts gegenüberliegende erste bzw. zweite Klemmflächen auf.

Bei besonders bevorzugten Ausführungsformen der Erfindung ist jeder Klemmfläche jeweils eine Schrägfläche zugeordnet, die in einer Umfangsrichtung des Verbindungsschafts in die jeweilige Klemmfläche übergeht. Die Schrägflächen können z.B. gewindemäßig um den Verbindungsschaft herum ausgebildet sein. Bei einer Drehung des Schnellspannelements laufen zuerst die Schrägflächen auf eines der beiden aneinanderzuklemmenden Teile auf und klemmen, da sich mit der Drehung der Abstand der Schrägfläche zur Anlagefläche verringert, beide Teile aneinander, bis schließlich auch die Klemmflächen das Teil hintergreifen können.

Um das Schnellspannelement leicht verdrehen zu können, ist an der dem Klemmkopf abgewandten Seite des Schnellspannelements ein Betätigungskopf ausgebildet. Die Anlagefläche kann beispielsweise durch den Bund eines den Betätigungskopf bildenden Schraubenkopfes gebildet sein.

Besonders bevorzugt ist der Verbindungsschaft an seinen den Längsseiten des Klemmkopfes zugewandten Seiten rund und an seinen den Schmalseiten des Klemmkopfes zugewandten Seiten angeflacht ausgebildet. Diese Maßnahme ermöglicht eine Vormontage des Schnellspannelements an einem zu befestigenden Teil. Über die angeflachten Seiten wird das Schnellspannelement über eine Engstelle hinweg in eine kreisrunde Aufnahme im einen Teil unverlierbar eingeführt und ist dort über die Rundabschnitte drehbar gelagert.

Bei bevorzugten Ausführungsformen der Erfindung steht am Verbindungsschaft mindestens eine abscherbare Nase radial nach außen vor. Mit dieser Nase lässt sich das Schnellspannelement verdrehsicher in einer entsprechenden Aufnahme des zu befestigenden Teils halten.

Vorzugsweise ist das Schnellspannelement ein Druckgussteil aus Metall.

Weitere Vorteile, der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigt:
- Fig. 1: ein erfindungsgemäßes Schnellspannelement in perspektivischer Ansicht;
- Fig. 2: das erfindungsgemäße Schnellspannelement in einer Seitenansicht;
- Fig. 3: das erfindungsgemäße Schnellspannelement in einer anderen Seitenansicht;
- Fig. 4: das erfindungsgemäße Schnellspannelement in einer Draufsicht;
- Fig.5: zwei mit den ersten Klemmflächen des erfindungsgemäßen Schnellspannelements aneinandergeklemmte Teile;
- Fig. 6: eine Draufsicht auf eines der in Fig. 5 gezeigten Teile; und
- Fig. 7: zwei mit den zweiten Klemmflächen des erfindungsgemäßen Schnellspannelements aneinandergeklemmte Flachteile.

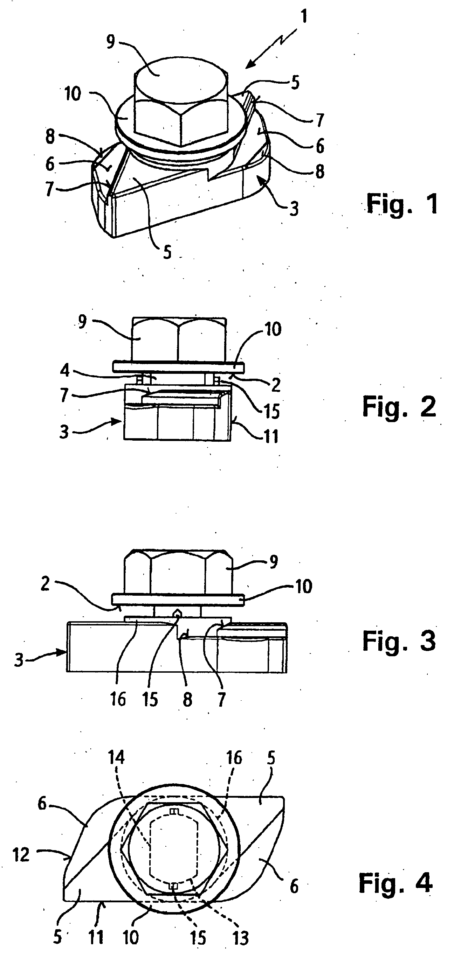

Das in Fig. 1 insgesamt mit **1** bezeichnete Schnellspannelement hat eine Anlagefläche **2** (Fig. 2), einen Klemmkopf **3** und einen dazwischen vorgesehenen Verbindungsschaft **4,** der gegenüber Anlagefläche 2 und Klemmkopf 3 jeweils nach innen zurückspringt. Der Klemmkopf 3 weist - jeweils einander bezüglich des Verbindungsschafts 4 gegenüberliegend - zwei erste Klemmflächen **5** und zwei zweite Klemmflächen **6** auf, die parallel zur Anlagefläche 2 verlaufen. Die ersten und zweiten Klemmflächen 5, 6 sind unterschiedlich weit von der Anlagefläche 2 beabstandet, nämlich im gezeigten Ausführungsbeispiel die erste Klemmfläche 5 ca. 3,5_mm und die zweite Klemmfläche 6 ca. 6_mm. In Umfangsrichtung des Verbindungsschafts **4** sind die ersten und zweiten Klemmflächen 5, 6 gegeneinander winkelversetzt und steigen jeweils gewindemäßig an.

Wie die Fign. 2 und 3 zeigen, ist jeder Klemmfläche 5, 6 jeweils eine Schrägfläche **7, 8** zugeordnet, die in einer Umfangsrichtung des Verbindungsschafts 4 in die jeweilige Klemmfläche 5, 6 übergeht. An der dem Klemmkopf 3 abgewandten Seite hat das Schnellspannelement 1 einen Schraubenkopf **9** mit einem Bund **10,** der die Anlagefläche 2 bildet.

Der Klemmkopf 3 hat, wie in Fig. 4 gezeigt, einen etwa rechteckförmigen Querschnitt mit Längsseiten **11** und Schmalseiten **12,** der im Bereich der zweiten Klemmflächen 6 abgerundet ist. Der Verbindungsschaft 4 hat an den den' Längsseiten 11 zugewandten Seiten Rundabschnitte **13** und an den den Schmalseiten 12 des Klemmkopfes 3 zugewandten Seiten angeflachte Abschnitte **14.** An den Rundabschnitten 13 steht jeweils eine Nase **15** radial nach außen vor. Am Übergang zum Verbindungsschaft 4 hat der Klemmkopf 3 noch einen Zentrierbund **16,** der bündig mit den beiden Längsseiten 11 des Klemmkopfes 3 abschließt.

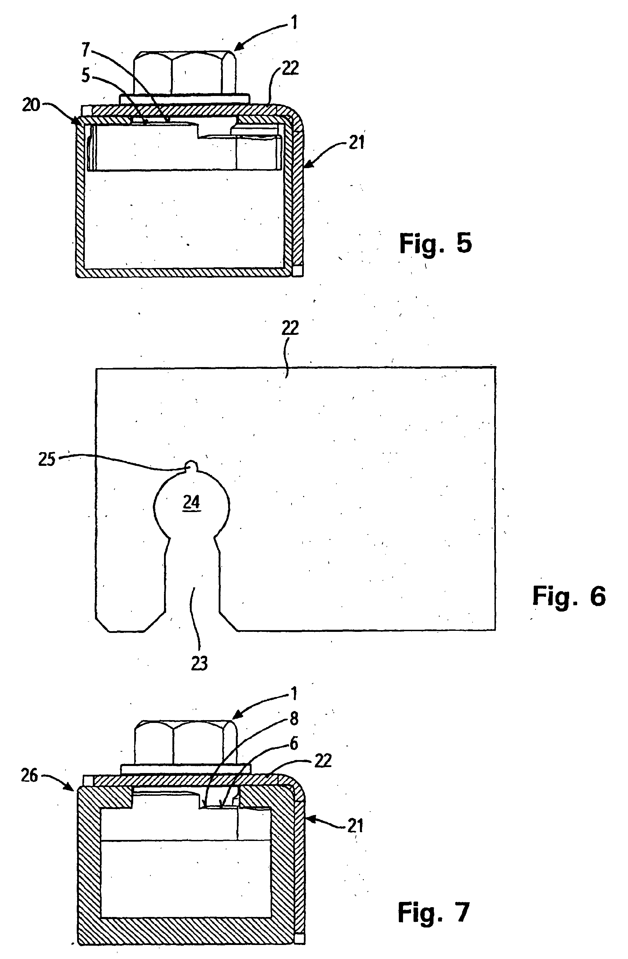

Fig. 5 zeigt ein C-Profil **20** und ein Winkelstück **21,** die mittels des Schnellspannelements 1 aneinander festgeklemmt sind. C-Profil 20 und Winkelstück 21 sind Stahlteile, während das Schnellspannelement 1 ein weicheres Druckgussteil ist.

Wie in Fig. 6 gezeigt, hat der eine Schenkel **22** des Winkelstücks 21 einen Schlitz **23,** der in eine kreisrunde Aufnahme **24** mündet und in diesem Mündungsbereich seitlich etwas verengt ist. Auf der dem Schlitz 23 gegenüberliegenden Seite hat die kreisrunde Aufnahme 24 noch eine zusätzliche kleine Aussparung **25.** Zur Vormontage wird das Schnellspannelement 1 mit seinem Verbindungsschaft 4 über den Schlitz 23 in die kreisrunde Aufnahme 24 eingeführt, wobei eine Nase 15 in die Aussparung 25 eingreift. Das Schnellspannelement 1 ist dadurch verdrehgesichert und durch die Engstelle in der kreisrunden Aufnahme 24 gehalten. Zur Befestigung am C-Profil 20 wird das Schnellspannelement 1 mit seinem Klemmkopf 3 in den Schlitz des C-Profils 20 eingesetzt, auf dessen Schlitzbreite der Durchmesser des Zentrierbunds 16 abgestimmt ist. Dann wird das Schnellspannelement 1 um ca. 80° gegenüber C-Profil 20 und Winkelstück 21 gedreht, wodurch erstens die Nase 15 in der Aufnahme 25 abgeschert wird und zweitens die Schrägflächen 7 und dann die ersten Klemmflächen 5 das C-Profil 20 hintergreifen. Der Abstand zwischen Anlagefläche 2 und ersten Klemmflächen 5 der Wandstärke von C-Profil 20 und Schenkel 22 entspricht, sind C-Profil 20 und Winkelstück 21 nun miteinander verbunden. Zum Lösen dieser Verbindung wird das Schnellspannelement 1 in entgegengesetzter Richtung um ca. 80° gedreht.

In Fig. 7 ist die Befestigung des Winkelstück 21 an einem anderen C-Profil **26** gezeigt. Die gemeinsame Wandstärke von C-Profil 26 und Schenkel 22 des Winkelstücks 21 entspricht hier dem Abstand zwischen Anlagefläche 2 und zweiten Klemmflächen 6. Durch Drehen des Schnellspannelements um ca. 45° hintergreifen zuerst die Schrägflächen 8 und dann die zweiten Klemmflächen 6 das C-Profil 26.

## Patentansprüche

1. Schnellspannelement (1) zum Aneinanderklemmen zweier Teile (20, 26; 21) mit einer Anlagefläche (2), einem Klemmkopf (3) und einem dazwischen vorgesehenen Verbindungsschaft (4), der gegenüber Anlagefläche (2) und Klemmkopf (3) jeweils nach innen zurückspringt, wobei am Klemmkopf (3) zur Anlagefläche (2) etwa parallele erste und zweite Klemmflächen (5, 6) vorgesehen sind, die von der Anlagefläche (2) unterschiedlich weit beabstandet und in Umfangsrichtung des Verbindungsschafts (4) gegeneinander winkelversetzt sind.

2. Schnellspannelement nach Anspruch 1, **dadurch gekennzeichnet, dass** der Klemmkopf (3) jeweils zwei einander bezüglich des Verbindungsschafts (4) gegenüberliegende erste bzw. zweite Klemmflächen (5, 6) aufweist.

3. Schnellspannelement nach Anspruch 1 oder 2, **dadurch gekennzeichnet, dass** jeder Klemmfläche (5, 6) jeweils eine Schrägfläche (7, 8) zugeordnet ist, die in einer Umfangsrichtung des Verbindungsschafts (4) in die jeweilige Klemmfläche (5, 6) übergeht.

4. Schnellspannelement nach einem der vorhergehenden Ansprüche, **dadurch gekennzeichnet, dass** an der dem Klemmkopf (3) abgewandten Seite des Schnellspannelements (1) ein Betätigungskopf vorgesehen ist.

5. Schnellspannelement nach Anspruch 4, **dadurch gekennzeichnet, dass** die Anlagefläche (2) durch den Bund (10) eines den Betätigungskopf bildenden Schraubenkopfes (9) gebildet ist.

6. Schnellspannelement nach einem der vorhergehenden Ansprüche, **dadurch gekennzeichnet, dass** der Verbindungsschaft (4) an seinen den Längsseiten (11) des Klemmkopfes (3) zugewandten Seiten rund und an seinen den Schmalseiten (12) des Klemmkopfes (3) zugewandten Seiten angeflacht ausgebildet ist.

7. Schnellspannelement nach einem der vorhergehenden Ansprüche, **dadurch gekennzeichnet, dass** am Verbindungsschaft (4) mindestens eine abscherbare Nase (15) radial nach außen vorsteht.

8. Schnellspannelement nach einem der vorhergehenden Ansprüche, **dadurch gekennzeichnet, dass** das Schnellspannelement (1) ein Gussteil ist.
